# EUROPÄISCHE PATENTSCHRIFT

(11) **EP 2 620 314 B1**
(45) Veröffentlichungstag und Bekanntmachung des Hinweises auf die Patenterteilung: **28.03.2018**
(21) Anmeldenummer: 12197194.9
(22) Anmeldetag: 14.12.2012
(51) Int. Cl.: B60K 28/06, B60W 40/08, B60W 30/08, B60W 30/09, B60W 30/12, B60W 30/14, B60W 40/04, B60W 40/06, B60W 40/068, B60W 40/072

(54) **Vorrichtung und Verfahren zur Überwachung des Betriebs eines Fahrzeugs und Vorrichtung und Verfahren zur Warnung des Fahrers**
Device and method for monitoring the operation of a vehicle and device and method for warning the driver
Dispositif et procédé de surveillance du fonctionnement d'un véhicule et dispositif et procédé d'avertissement du conducteur

(30) Priorität: 28.01.2012 DE 102012001741
(43) Veröffentlichungstag der Anmeldung: 31.07.2013
(73) Patentinhaber: Volkswagen Aktiengesellschaft, 38440 Wolfsburg (DE)
(72) Erfinder: Bogner, Nico, 29386 Hankensbüttel (DE); Büthorn, Robert, 10318 Berlin (DE); Wappler, Dr. Stefan, 10717 Berlin (DE); Schrader, Markus, 38114 Braunschweig (DE)

(56) Entgegenhaltungen:
- DE-A1- 10 303 010
- DE-A1-102005 052 032
- DE-A1-102006 025 593
- DE-A1-102006 051 930
- DE-A1-102007 048 842
- DE-A1-102009 009 975

## Beschreibung

Die Erfindung betrifft eine Vorrichtung zur Überwachung des Betriebs eines Fahrzeugs und eine Vorrichtung zur Warnung eines Fahrers eines Fahrzeugs. Die Erfindung betrifft weiterhin ein Verfahren zur Überwachung des Betriebs des Fahrzeugs und .ein Verfahren zur Warnung des Fahrers.

In Fahrzeugen werden neuerdings Überwachungssysteme eingesetzt, welche eingerichtet sind, um das Vermögen eines Fahrers, das Fahrzeug sicher zu betreiben, zu überwachen. Zum Beispiel kann das Vermögen, das Fahrzeug sicher zu betreiben, durch Müdigkeit oder aber geringe Aufmerksamkeit des Fahrers beeinträchtigt sein. Zum Beispiel sind Überwachungssysteme bekannt, welche Müdigkeit des Fahrers erkennen können, insbesondere um verkehrsgefährdendem Sekundenschlaf vorzubeugen. Zum Beispiel setzen solche Systeme eine Überwachung des Lidschlags des Fahrers oder des Lenkverhaltens oder die vorangegangene Fahrtzeit ein, um Müdigkeit zu erkennen. Wenn Müdigkeit des Fahrers erkannt wird, weist typischerweise das System den Fahrer z.B. mittels einer visueller oder akustischen Warnung darauf hin.

Andere Systeme wiederum sind eingerichtet, um die Aufmerksamkeit des Fahrers während der Fahrt zu überwachen. Ein Fahrer ist z.B. abgelenkt, wenn er sein Augenmerk nicht auf die Fahrtsituation, in der sich das Fahrzeug befindet, richtet. Z.B. kann dies der Fall sein, wenn der Fahrer Bordinstrumente, etwa ein Navigationsgerät, bedient oder sich anderen Insassen des Fahrzeugs zuwendet. Solche Systeme können etwa mittels Überwachung der vom Fahrer durchgeführten Einstellungen an Fahrzeugsystem, von ein- und ausgehenden Telefonaten oder aber optischer Verfolgung der Gesichtspartien des Fahrers mittels eines Kamerasystems die Aufmerksamkeit des Fahrers erkennen.

Aus DE 10 2005 052 032 A1 ist eine Vorrichtung zur Beeinflussung der Längsgeschwindigkeit eines Kraftfahrzeugs bekannt. Eine herabgesetzte Aufmerksamkeit des Fahrers kann basierend auf häufigen Abweichungen von der Spurmitte oder häufigen Auslösungen des Spurverlassenswarnsystems bestimmt werden.

Aus DE 10 2006 051 930 A1 sind Techniken zur Fahrerzustandserkennung bekannt. Ein den Fahrerzustand charakterisierendes Signal wird abgeleitet aus der Häufigkeit der Minima im zeitlichen Verlauf einer Größe, welche das Fahrspurverhalten des Fahrers repräsentiert.

Aus DE 10 2009 009 975 A1 ist ein Verfahren zur Ermittelung der Aufmerksamkeit eines Fahrers aus mittels wenigstens eines Sensors gemessenen Messwerten wenigstens einer die Lenktätigkeit und / oder die Abstandshaltung zu einem Vorderfahrzeug beschreibenden Größe bekannt.

Aus DE 10 2006 025 593 A1 ist eine funktionelle Verknüpfung einer Fahrerassistenzvorrichtung derart mit einem Tempomat bekannt, dass bei Ansprechen der Fahrerassistenzvorrichtung die für die Tempömatfunktion gewählte Dauergeschwindigkeit abgestellt wird. Bei einer Übermüdung des Kraftfahrzeug-Lenkers wird die vom Tempomat vorgegebene Dauergeschwindigkeit automatisch abgestellt.

Jedoch kann es bei den bekannten Systemen vorkommen, dass eine Bestimmung der Fähigkeit, das Fahrzeug aufgrund von Müdigkeit oder Aufmerksamkeit zu betreiben, ungenau und undifferenziert geschieht. Auch kann eine dahingehende Warnung durch den Fahrer als störend empfunden werden, z.B. in Situationen, in welchen ein hoher Grad an Aufmerksamkeit oder Geistesgegenwärtigkeit gar nicht benötigt wird. Solche Situationen können z.B. die Geradeaus-Fahrt auf einer Schnellstraße, geringes Verkehrsaufkommen, Fahrtpausen etc. betreffen.

Deshalb besteht ein Bedarf, verbesserte Überwachungsvorrichtungen und Warnvorrichtungen bereit zu stellen. Insbesondere besteht ein Bedarf, diese Vorrichtungen genauer in der Bestimmung der zu überwachenden Merkmale und differenzierter in der Warnung zu gestalten.

Es werden Vorrichtungen und Verfahren mit den in den unabhängigen Ansprüchen definierten Merkmalen angegeben. Die abhängigen Ansprüche definieren Ausführungsformen.

Gemäß einem Aspekt betrifft die Erfindung eine Vorrichtung zur Überwachung des Betriebs eines Fahrzeugs. Die Vorrichtung umfasst ein Fahrerassistenzsystem und ein Überwachungssystem. Das Fahrerassistenzsystem ist eingerichtet, um einen Fahrer des Fahrzeugs bei dem Betrieb des Fahrzeugs durch eine Assistenzaktion selektiv zu unterstützen. Das Überwachungssystem ist eingerichtet, um einen Indikator, dessen Wert ein Vermögen des Fahrers, das Fahrzeug aufgrund von Müdigkeit des Fahrers zu betreiben, quantifiziert, basierend auf einer Häufigkeit des Auftretens der Assistenzaktion bereit zu stellen.

Z.B. kann die Häufigkeit der Assistenzaktion pro fester und möglicherweise voreingestellter Zeitspanne bestimmt werden. Eine Assistenzaktion kann eine visuelle oder akustische oder haptische oder eine daraus kombinierte Warnung des Fahrers oder einen Eingriff in den Betrieb des Fahrzeugs bezeichnen. Ein Eingriff in den Betrieb des Fahrzeugs kann die Lenkung, die Bremse etc. betreffen. Greift ein bestimmtes Fahrerassistenzsystem z.B. häufiger in den Betrieb des Fahrzeugs ein und/oder warnt den Fahrer häufiger, d.h. tritt die Assistenzaktion häufiger auf, so kann dies als Indiz für einen erhöhten Müdigkeitsgrad des Fahrers gewertet werden. Das Überwachungssystem kann dann eingerichtet sein, den Wert des Indikators z.B. zu erhöhen, d.h. dann, wenn hohe Indikatorwerte einem hohen Grad der Müdigkeit entsprechen. Im Falle seltener Aktivität des bestimmten Fahrerassistenzsystem kann möglicherweise davon ausgegangen werden, dass der Fahrer geistesgegenwärtig und umsichtig und daher in wachem Zustand das Fahrzeug betreibt, sodass das Überwachungssystem dann eingerichtet sein kann, den Wert des Indikators zu erniedrigen. Es ist natürlich auch möglich andere Zuordnungen der Indikatorwerte zu einem Grad der Müdigkeit vorzunehmen, z.B. sodass niedrige Indikatorwerte einem hohen Grad der Müdigkeit entsprechen.

Eine solche Vorrichtung kann es erlauben, die Müdigkeit des Fahrers besonders genau zu bestimmen. Insbesondere kann es aufgrund der Möglichkeit, die Müdigkeit besonders genau zu bestimmen, möglich sein, die Müdigkeit besonders differenziert zu bestimmen, z.B. als Zahlenwert auf einer Skala von 1 bis 10. Im Vergleich zu Vorrichtungen, welche eine Müdigkeit z.B. lediglich undifferenziert bestimmen, d.h. zwischen den Zuständen "müde" und "nicht müde" unterscheiden, erlaubt dies eine verbesserte Genauigkeit. Eine verbesserte Genauigkeit der Müdigkeitserkennung kann es erlauben, diesen erhöhten Informationsgehalt differenziert zur Steuerung verschiedener Fahrzeugparameter zu verwenden, sodass auf erkannte Müdigkeit entsprechend, z.B. vorbeugend oder unterstützend, reagiert werden kann.

Eine weitere Größe, die einen Einfluss auf das Vermögen des Fahrers, das Fahrzeug zu betreiben, haben kann, ist eine Aufmerksamkeit des Fahrers bezüglich einer eine Umgebung des Fahrzeugs beschreibenden Fahrtsituation. Z.B. kann der Fahrer sein Augenmerk nicht auf die anderen Verkehrsteilnehmer und die Straße lenken, sondern z.B. mit Einstellungen von Bordelektronik oder mit einem Gespräch beschäftigt sein. Dies bedeutet, dass der Fahrer abgelenkt sein kann. Dies wird nachfolgend in Bezug auf einen weiteren Aspekt der Erfindung näher erläutert.

Im Allgemeinen sind Aufmerksamkeit und Ablenkung unterschiedliche Ursachen für ein verringertes Vermögen des Fahrers das Fahrzeug z.B. verkehrssicher zu betreiben. Es kann daher einerseits erforderlich sein, Aufmerksamkeit und Müdigkeit unterschiedlich z.B. hinsichtlich des Betriebs des Fahrzeugs zu bewerten. Andererseits ist es aber auch möglich, dass die Vorrichtung zur Überwachung des Betriebs eines Fahrzeugs gemäß dem gegenwärtigen Aspekt ein Überwachungssystem für Aufmerksamkeit des Fahrers umfasst, welches eingerichtet ist, um einen Indikator der Aufmerksamkeit des Fahrers bereit zu stellen, dessen Wert ein Vermögen des Fahrers, das Fahrzeug aufgrund der Aufmerksamkeit des Fahrers bezüglich einer eine Umgebung des Fahrzeugs beschreibenden Fahrtsituation zu betreiben, quantifiziert. Hierbei kann das Überwachungssystem für die Aufmerksamkeit des Fahrers eingerichtet sein, um den Indikator basierend auf der Häufigkeit des Auftretens der Assistenzaktion bereit zu stellen.

Zum Beispiel kann das Fahrerassistenzsystem durch einen Betriebsparameter charakterisiert sein. Das Fahrerassistenzsystem kann eingerichtet sein, um basierend auf dem Wert des Indikators den Betriebsparameter und/oder die Assistenzaktion einzustellen. Weiterhin kann das Fahrerassistenzsystem eingerichtet sein, ein Merkmal einer eine Umgebung des Fahrzeugs beschreibenden Fahrtsituation zu erkennen und durch einen Wert des Merkmals zu quantifizieren. Basierend auf einem Schwellenwertvergleich des Betriebsparameters mit dem Wert des Merkmals kann das Fahrerassistenzsystem eingerichtet sein, um den Fahrer selektiv durch die Assistenzaktion zu unterstützen. Derart werden typischerweise Sensor-Messdaten ausgewertet, um die Fahrtsituation parametrisiert zu bewerten.

Zum Beispiel kann das Fahrerassistenzsystem ein Verkehrzeichenerkennungssystem sein, welches als Betriebsparameter eine Schwellenwertgeschwindigkeit verwendet und mit dem Merkmal der erkannten Geschwindigkeitsbegrenzung vergleicht. Das Fahrerassistenzsystem kann auch ein Spur-Wechsel-Assistent sein, welcher als Betriebsparameter eine Schwellenwertentfernung mit dem Merkmal der erkannten Entfernung zu einem seitlich benachbarten Fahrzeug vergleicht. Weiterhin kann das Fahrerassistenzsystem ein Spur-Halte-Assistent sein, welcher den Betriebsparameter einer Schwellenwertentfernung mit einer erkannten Entfernung zu einer seitlich benachbarten Fahrbahnmarkierung vergleicht. Weiterhin kann das Fahrerassistenzsystem ein Kollisions-Warnsystem sein, welches als Betriebsparameter eine Schwellenwertentfernung mit dem Merkmal der erkannten Entfernung zu einem frontalen Hindernis vergleicht.

Für solche Fahrerassistenzsysteme können die Assistenzaktionen jeweils sein: für das Verkehrszeichenerkennungssystem kann die Assistenzaktion eine kombinierte akustische und visuelle Warnung bezüglich der erkannten Geschwindigkeitsbegrenzung sein, für den Spurwechselassistent kann die Assistenzaktion eine visuelle Warnung von bestimmter Größe und bestimmtem zeitlichen Verlauf in einem Seitenspiegel des Fahrzeugs sein, für den Spurhalteassistent kann die Assistenzaktion ein aktiver Eingriff in eine Lenkung des Fahrzeugs und Vibration eines Lenkrads der Lenkung sein und für das Kollisions-Warnsystem kann die Assistenzaktion eine kurzzeitige Betätigung einer Fahrzeugbremse des Fahrzeugs sein.

Wird, basierend auf dem Wert des Indikators, der Betriebsparameter und/oder die Assistenzaktion des Fahrerassistenzsystems eingestellt, so kann das Fahrerassistenzsystem zum Beispiel auf erkannte erhöhte Müdigkeit des Fahrers reagieren und den Betrieb des Fahrzeugs in Anbetracht dessen besser unterstützen bzw. überwachen.

Zum Beispiel kann es möglich sein, dass das Fahrerassistenzsystem eingerichtet ist, um, wenn der Wert des Indikators ein eingeschränktes Vermögen des Fahrers das Fahrzeug zu betreiben beschreibt, den Betriebsparameter so einzustellen, dass der Schwellenwertvergleich für einen größeren Wertbereich des Werts des Merkmals in der Assistenzaktion resultiert. Das Fahrerassistenzsystem kann auch eingerichtet sein, um, wenn der Wert des Indikators ein eingeschränktes Vermögen des Fahrers, das Fahrzeug zu betreiben, beschreibt, die Assistenzaktion so einzustellen, dass die Assistenzaktion den Betrieb des Fahrzeugs stärker unterstützt. Dies bedeutet mit anderen Worten, dass bei erkannter erhöhter Müdigkeit des Fahrers eine Anpassung des Fahrerassistenzsystems derart passieren kann, dass es früher oder häufiger oder umfassender in den Betrieb des Fahrzeugs eingreift, sowie bei einer Assistenzaktion in Form einer Warnung die Warnung für den Fahrer wahrnehmbarer oder intensiver gestaltet.

Zum Beispiel kann bei einer visuellen Warnung die visuelle Warnung je nach dem erkannten Grad der Müdigkeit z.B. mit höherer Intensität gestaltet werden. Dies kann dadurch geschehen, dass der Bereich der visuellen Warnung erhöht wird oder zum Beispiel ein Warnlicht durchgängig leuchtet oder mit bestimmten Frequenzen aufleuchtet. Zum Beispiel kann das wiederholte Aufblinken eines Warnlichts in einem besonders großen Bereich des Seitenspiegels bei erkannter Müdigkeit bewirken, dass der Fahrer trotz seiner erhöhten Müdigkeit angemessen über das Vorhandensein eines weiteren Fahrzeugs im toten Winkel durch zum Beispiel den Spur-Wechsel-Assistenten gewarnt wird. Im Falles des Fahrerassistenzsystems der Verkehrszeichenanzeige kann selektiv bei erkannter Müdigkeit dem Fahrer zum Beispiel eine visuelle und/oder akustische Warnung mit der aktuellen Geschwindigkeitsbegrenzung als Assistenzaktion bereitgestellt werden. Die visuelle Warnung kann zum Beispiel durch Blinken der Geschwindigkeitsbegrenzung in einem Kombiinstrument des Fahrzeugs erfolgen. Durch Anpassen des Betriebsparameters bei erkannter Müdigkeit derart, dass für einen größeren Wertebereich der Wert des Merkmals in einer Assistenzaktion resultiert, kann zum Beispiel erreicht werden, dass Fahrerassistenzsysteme früher oder häufiger den Fahrer vor kritischen Situationen im Umfeld des Fahrzeugs warnen bzw. in den Fahrzeugbetrieb eingreifen. Zum Beispiel kann das Kollisions-Warnsystem einen Bremsdruck bei einem langsamen oder stehenden in Fahrtrichtung befindlichem Objekt über die Bremse an den Fahrer vermitteln, also eine haptische Warnung vornehmen. Bei einem erhöhten Grad der Müdigkeit kann eine solche Warnung früher, d.h. bei größeren Abständen zu dem Objekt, ausgegeben werden. Es kann unter Umständen auch möglich sein, dass bei einem Wert des Indikators, welcher einem hohen Grad der Müdigkeit entspricht, das Kollisions-Warnsystem durch eine gezielte Bremsaktion in den Betrieb des Fahrzeugs aktiv eingreift, also wirksam eine Geschwindigkeit des Fahrzeugs reduziert.

Hierbei sind vielfache Abwandlungen möglich. Generell kann die Assistenzaktion bzw. der Betriebsparameter so angepasst werden, dass bei einem erkannten hohen Grad der Müdigkeit die derart konfigurierten Fahrerassistenzsysteme einen verkehrssicheren Betrieb des Fahrzeugs fördern. Im Allgemeinen kann dies auch bei einem erkannten niedrigen Grad der Aufmerksamkeit des Fahrers gelten. Es wird angemerkt, dass die Konstruktion und der Betrieb von Fahrerassistenzsystemen, wie zum Beispiel dem Verkehrszeichenerkennungssystem, dem Spur-Wechsel-Assistenten, dem Spur-Halte-Assistenten oder dem Kollisions-Warnsystem, dem Fachmann bekannt sind. Es besteht daher keine Notwendigkeit, nähere Details zu Konstruktion und Betrieb dieser Fahrerassistenzsysteme in diesem Rahmen darzulegen.

Eine solche Vorrichtung gemäß dem gegenwärtig diskutierten Aspekt kann den Effekt haben, dass eine möglicherweise bi-direktionale Kopplung von Fahrerassistenzsystemen einerseits und dem Überwachungssystem für Müdigkeit des Fahrers andererseits erfolgen kann. Z.B. kann der erkannte Grad der Müdigkeit differenziert zur Anpassung der jeweiligen Betriebsparameter und/oder der Assistenzaktionen der Fahrerassistenzsysteme erfolgen. Andersherum ist es aber auch möglich, dass die Häufigkeit des Ansprechens der Fahrerassistenzsysteme, d.h. die Häufigkeit des Auftretens der Assistenzaktion dazu verwendet wird, die Bereitstellung des Grads der Müdigkeit zu verbessern. Dies kann die Sicherheit im Straßenverkehr erhöhen.

Es wird angemerkt, dass es auch möglich sein kann, eine uni-direktionale Kopplung des Fahrerassistenzsystems mit der Überwachungseinrichtung lediglich dergestalt vorzunehmen, dass das Fahrerassistenzsystem eingerichtet ist, um basierend auf dem Wert des Indikators den Betriebsparameter und/oder die Assistenzaktion einzustellen. Hierbei kann es verzichtbar sein, die Häufigkeit des Auftretens der Assistenzaktion pro Zeitspanne für das Bereitstellen des Indikators durch das Müdigkeitsüberwachungssystem zu berücksichtigen. Die Erfindung kann also auch eine Vorrichtung zur Überwachung des Betriebs des Fahrzeugs mit einem Fahrerassistenzsystem wie oben beschrieben, sowie einem Überwachungssystem betreffen, wobei das Überwachungssystem eingerichtet ist, um einen Indikator, dessen Wert ein Vermögen des Fahrer, das Fahrzeug aufgrund einer Müdigkeit des Fahrers zu betreiben, quantifiziert, bereit zu stellen und wobei das Fahrerassistenzsystem eingerichtet ist, um den Fahrer selektiv beim Betrieb des Fahrzeugs durch eine Assistenzaktion zu unterstützen und basierend auf dem Wert des Indikators einen Betriebsparameter und/oder die Assistenzaktion einzustellen. Die Erfindung kann auch ein entsprechendes Verfahren betreffen.

Gemäß einem weiteren Aspekt betrifft die Erfindung ein Verfahren zur Überwachung des Betriebs eines Fahrzeugs. Das Verfahren umfasst das selektive Unterstützen des Betriebs des Fahrzeugs mittels einer Assistenzaktion eines Fahrerassistenzsystems und das Bereitstellen eines Indikators, dessen Wert ein Vermögen des Fahrers, das Fahrzeug aufgrund einer Müdigkeit des Fahrers zu betreiben, quantifiziert. Das Bereitstellen erfolgt basierend auf der Häufigkeit des selektiven Unterstützens.

Für ein solches Verfahren können Effekte erzielt werden, die den Effekten entsprechen, welche mit der Vorrichtung zur Überwachung des Betriebs eines Fahrzeugs gemäß einem weiteren Aspekt der Erfindung erzielt werden können.

Das Verfahren kann weiterhin das erkennen eines Merkmals einer eine Umgebung des Fahrzeugs beschreibenden Fahrtsituation mittels eines Fahrerassistenzsystems und das Quantifizieren eines Werts des Merkmals umfassen. Das Verfahren kann weiterhin das Durchführen eines Schwellenwertvergleichs eines Betriebsparameters des Fahrerassistenzsystems mit dem Wert des Merkmals umfassen, wobei das selektive Unterstützen basierend auf dem Schwellenwertvergleich stattfindet. Unterschreitet z.B. der Wert des Merkmals eine kritische Schwelle, welche durch den Betriebsparameter vorgegeben ist, so kann das Fahrerassistenzsystem durch die Assistenzaktion warnend oder aktiv in den Betrieb des Fahrzeugs eingreifen.

Hierbei kann das Verfahren insbesondere das Einstellen des Betriebsparameters und / oder der Assistenzaktion des Fahrerassistenzsystems basierend auf dem bereitgestellten Wert des Indikators umfassen. Derart kann der Betrieb und die Wirkung des Fahrerassistenzsystems an den Grad der Müdigkeit, wie er durch den Wert des Indikators indiziert wird, angepasst werden.

Zum Beispiel kann, wenn der Wert des Indikators ein eingeschränktes Vermögen des Fahrers, das Fahrzeug zu betreiben, beschreibt, das Einstellen des Betriebsparameters so erfolgen, dass der Schwellenwertvergleich für einen größeren Wertebereich des Werts des Merkmals in der Assistenzaktion des Fahrerassistenzsystems resultiert. Es ist auch möglich, dass wenn der Wert des Indikators ein eingeschränktes Vermögen des Fahrers, das Fahrzeug zu betreiben, beschreibt, das Einstellen der Assistenzaktion so erfolgt, dass die Assistenzaktion den Betrieb des Fahrzeugs stärker unterstützt. Ein hoher Grad der Müdigkeit kann z.B. in einem stärkeren Eingriff in den Betrieb des Fahrzeugs oder einer Warnung mit höherer Wahrnehmbarkeit durch den Fahrer resultierten. Auch kann die Assistenzaktion früher und / oder häufiger und / oder umfassender durchgeführt werden.

Das Verfahren kann mit einer Vorrichtung nach einem Aspekt zur Überwachung des Betriebs eines Fahrzeugs oder entsprechenden Ausführungsbeispielen durchgeführt werden.

Gemäß einem weiteren Aspekt betrifft die Erfindung eine Vorrichtung zur Warnung eines Fahrers eines Fahrzeugs. Die Vorrichtung umfasst ein Überwachungssystem, ein weiteres Überwachungssystem und eine Warneinrichtung. Das Überwachungssystem ist eingerichtet, einen Indikator bereit zu stellen, dessen Wert ein Vermögen des Fahrers, das Fahrzeug aufgrund einer Aufmerksamkeit des Fahrers bezüglich einer eine Umgebung beschreibenden Fahrtsituation zu betreiben, quantifiziert. Das weitere Überwachungssystem ist eingerichtet, um einen weiteren Indikator bereits zu stellen, dessen Wert eine Kritikalität der Fahrtsituation quantifiziert. Die Warneinrichtung ist eingerichtet, um basierend auf einem Schwellenwertvergleich des Werts des Indikators mit einem Schwellenwert und basierend auf einem weiteren Schwellenwertvergleich des Wert des weiteren Indikators mit einem weiteren Schwellenwert, den Fahrer selektiv zu warnen und/oder in den Betrieb des Fahrzeugs einzugreifen.

Aufmerksamkeit kann hierbei den Grad der Wahrnehmung der Fahrtsituation, in der sich das Fahrzeug befindet, durch den Fahrer bezeichnen. Dies bedeutet, dass die Aufmerksamkeit des Fahrers z.B. invers proportional zu seiner Ablenkung von der Fahrtsituation sein kann. Das Überwachungssystem kann z.B. mittels einer Überwachung der Blickrichtung des Fahrers, der Überwachung des Betriebs der Unterhaltungs- und Informationssysteme im Fahrzeug, der Überwachung der Anzahl der anwesenden Personen etc. den Indikator bereit stellen. Entsprechende Systeme sind dem Fachmann bekannt, sodass keine Notwendigkeit besteht, in diesem Rahmen weitere Details auszuführen. Ein solches Überwachungssystem für Aufmerksamkeit kann auch, wie oben stehend erläutert, Anwendung in der Vorrichtung gemäß einem obenstehenden Aspekt finden.

Die Fahrtsituation kann hierbei den Zustand des Fahrzeugs selbst betreffen, z.B. Geschwindigkeit, Fahrtrichtung, Funktionsfähigkeit der Komponenten, Anzahl der Insassen, Reifendruck, Reifentyp, Beladung, Anhänger, Tankfüllgrad, etc. Die Fahrtsituation kann aber auch das Umfeld des Fahrzeugs betreffen, also z.B. Hindernisse, Gefahrensituation, Niederschlag, benachbarte Verkehrsteilnehmer, Geschwindigkeitsbegrenzungen, Glätte, Außentemperatur, Helligkeit, Tageszeit, Straßentyp, Steigung der Strasse, Kurvenradien der Straße, Verkehrsdichte, Stau, Abstand zu vorausfahrendem Fahrzeug, Abstand zu seitlichem Fahrzeug, etc. Alle diese Merkmale können durch geeignete Parameter wie Anzahl, Entfernung, Menge, etc. parametrisiert und dadurch quantifiziert werden. Rein illustrativ kann z.B. eine Fahrtsituation mit Schnee, stark abschüssiger Straße und einer engen Kurve unmittelbar voraus eine erhöhte Kritikalität im Vergleich zu einer Fahrtsituation aufweisen, die eine Geradeaus-Fahrt auf einer wenig befahrenen Schnellstraße bei Temperaturen deutlich über dem Gefrierpunkt betrifft. Z.B. könnte die erst genannte Fahrtsituation durch einen Wert 8 aus 10 des weiteren Indikators charakterisiert sein, während die letztgenannte Fahrtsituation durch einen Wert 2 aus 10 charakterisiert sein könnte. Es sind natürlich andere Zuordnungen des Werts des Indikators zur Kritikalität denkbar.

Wenn der Fahrer z.B. ein Radio oder ein Navigationssystem des Fahrzeugs bedient, so richtet er typischerweise seine Aufmerksamkeit zu einem geringeren Grad auf die Fahrtsituation. Der Fahrer kann z.B. auf ein Display des Navigationssystems blicken, anstatt seinen Blick auf die Straße zu lenken. Dies kann die die Aufmerksamkeit bezüglich der Fahrtsituation reduzieren. Ein anderes Beispiel wäre, dass der Fahrer in ein Telefonat vertieft ist, sodass er nicht bemerkt, dass der Füllgrad des Treibstofftanks einen kritisch niedrigen Wert erreicht hat. Diese Beispiele sind rein illustrativ und nicht beschränkend.

Die Warneinrichtung gemäß dem gegenwärtig diskutierten Aspekt der Erfindung kann den Effekt haben, dass eine differenziertere Warnung des Fahrers bzw. differenzierter Eingriff in den Fahrzeugbetrieb ermöglicht wird. Dies kann basierend auf sowohl dem Grad der Kritikalität der Fahrtsituation, als auch basierend auf dem Grad der Aufmerksamkeit des Fahrers bezüglich der Fahrtsituation geschehen. Zum Beispiel kann eine Warnung immer dann erfolgen, wenn ein besonderes geringer Grad der Aufmerksamkeit des Fahrers erreicht ist. Eine Warnung kann auch immer dann erfolgen, wenn eine Situation mit einem besonders hohen Grad der Kritikalität vorliegt. Bei einem abgestuften Grad der Aufmerksamkeit des Fahrers, zum Beispiel wenn der Fahrer noch eine Restaufmerksamkeit auf die Fahrtsituation des Fahrzeugs richtet, kann eine Warnung des Fahrers / ein Eingriff in den Betrieb selektiv durch die Warneinrichtung z.B. immer dann erfolgen, wenn eine besonders kritische Situation vorliegt. In einem solchen Fall kann es wünschenswert sein, den Fahrer vor Situationen geringer Kritikalität, zum Beispiel einem geringen Füllgrad des Treibstofftanks, nicht zu warnen, vor besonders kritischen Situationen aber dennoch zu warnen, zum Beispiel vor einer immanenten Überschreitung einer Fahrspurmarkierung oder einer baldig bevorstehenden Kollision. Insbesondere kann eine Warnung auf diejenigen Situationen beschränkt werden, in denen eine Warnung tatsächlich notwendig ist, um eine Erhöhung der Verkehrssicherheit des Straßenverkehrs zu erreichen. Bei besonders kritischen Situationen kann die Warneinrichtung sicherheitserhöhend in den Betrieb des Fahrzeugs eingreifen, z.B. durch bremsen, lenken, beschleunigen, aktivieren der Warnblinkanlage etc. Dies kann z.B. mittels geeigneter Fahrerassistenzsysteme erfolgen.

Die Vorrichtung kann auch ein Fahrerassistenzsystem umfassen, welches eingerichtet ist, um ein Merkmal der Fahrtsituation zu erkennen und durch einen Wert des Merkmals zu quantifizieren. Hierbei kann das weitere Überwachungssystem eingerichtet sein, um den weiteren Indikator basierend auf dem Wert des Merkmals bereitzustellen.

Zum Beispiel kann das Überwachungssystem eingerichtet sein, um den Wert des weiteren Indikators basierend auf einem Merkmal der Fahrtsituation bereit zu stellen, welches aus der Gruppe ausgewählt wird, welche die folgenden Elemente umfasst: Zeit bis zum Überfahren einer Spurmarkierung; Zeit bis zur Kollision mit einem frontal befindlichen Objekt; Fahrbahnbeschaffenheit; Glätte; Reibwert; enge Kurve voraus; Stauende voraus; Geschwindigkeitsübertretung.

Zum Beispiel kann eine in Fahrtrichtung orientierte Kamera oder ein Radarsystem eine Bestimmung des Abstandes zu in Fahrtrichtung befindlichen Objekten ermöglichen, d.h. ein Kollisions-Warnsystem. Fahrspurmarkierungen können optisch identifiziert werden. Zusammen mit der Information über die Geschwindigkeit des Fahrzeugs kann daraus die Zeit bis zur Kollision mit einem frontal befindlichen Objekt bzw. die Zeit bis zum Überfahren einer Spurmarkierung errechnet werden. Ein Navigationssystem mit einem Verkehrsfunkinformationssystem, z.B. mittels Traffic Message Channel (TMC), kann es erlauben ein voraus befindliches Hindernis, etwa ein Stauende zu identifizieren oder eine besonders enge Kurve melden. Eine Verkehrszeichenerkennung, möglicherweise in Kombination mit einer entsprechend ausgestatteten Datenbank des Verkehrsnetzes, kann es erlauben, die aktuelle Geschwindigkeit des Fahrzeugs mit einer aktuellen Geschwindigkeitsbegrenzung zu vergleichen. Fahrdynamikdaten, etwa aus einem Elektronischen Stabilitätsprogramm (ESP), können Informationen über die Fahrbahnbeschaffenheit, z.B. einen Reibwert liefern. Dem Fachmann sind entsprechende Techniken bekannt, sodass hier keine weitere Detaillierung erforderlich ist.

Es ist auch möglich, dass die Warneinrichtung eingerichtet ist, um den weiteren Schwellenwert basierend auf einem Betriebsmodus eines Fahrerassistenzsystems einzustellen. Die Warneinrichtung kann auch eingerichtet sein, den weiteren Schwellenwert basierend auf dem Wert des Indikators einzustellen. Der Betriebsmodus des Fahrerassistenzsystems kann zum Beispiel den Betriebsstatus des Fahrerassistenzsystems umfassen, d.h. bezeichnen, ob das Fahrerassistenzsystem an oder ausgeschaltet ist, oder eingeschränkt aktiv ist. Zum Beispiel kann es nämlich möglich sein, mittels bestimmter Fahrerassistenzsysteme die Kritikalität einer Fahrtsituation zu mindern. So erlaubt etwa ein ESP Fahrerassistenzsystem, dass die Fahrdynamik des Fahrzeugs vorteilhaft gesteuert wird, so dass z.B. ein Risiko des Ausbrechens bzw. Verlassens der Fahrtspur vermindert werden kann. Ein Antiblockiersystem (ABS) erlaubt es, z.B. bei geringem Reibwert, Bremsvorgänge sicherer zu gestalten. Diese und weitere Beispiele können geeignet sein, die Kritikalität einer Fahrtsituation zu mindern.

Mit anderen Worten kann zusätzlich die Information zum Status der momentan aktiven Fahrerassistenzsysteme verwendet werden, um den weiteren Schwellenwert, d.h. den in der Bestimmung der Kritikalität der Fahrtsituation maßgeblichen weiteren Schwellenwert, zu beeinflussen. Sind nämlich zum Beispiel bestimmte Fahrerassistenzsysteme, etwa eine Geschwindigkeitsregelanlage oder ein Kollisions-Warnsystem aktiv, so kann der weitere Schwellenwert davon abhängig vergrößert oder verkleinert werden. Zum Beispiel kann bei aktiver Geschwindigkeitsregelanlage (GRA) der weitere Schwellenwert derart eingestellt werden, dass berücksichtigt wird, dass eine geringere Aufmerksamkeit des Fahrers in diesem Fall kritischer ist. Dies kann der Fall sein, da bei aktiver GRA der Fahrer z.B. längere Zeit zur Einleitung einer Bremsaktion benötigt und sich dadurch der Bremsweg verlängern kann. Entsprechend kann bei aktiver adaptiver Geschwindigkeitsregelanlage (ACC), welche abhängig von vorausfahrenden Objekten die Geschwindigkeit des Fahrzeugs automatisch anpassen kann bzw. Bremsvorgänge automatisch einleiten kann, der weitere Schwellenwert derart angepasst werden, dass berücksichtigt wird, dass eine geringere Aufmerksamkeit des Fahrers in diesem Falle unkritischer ist. Wie aus diesem Beispiel ersichtlich, kann die Abhängigkeit des weiteren Schwellenwerts von dem An/Aus-Status der ACC und GRA unterschiedliche Abhängigkeiten aufweisen, was im allgemeinen auf die verschiedenen Fahrerassistenzsysteme übertragen kann. Diese Beispiele sind rein illustrativ und nicht beschränkend.

Insbesondere kann die Warneinrichtung auch derart eingerichtet sein, dass der weitere Schwellenwert basierend auf dem Wert des Indikators, d.h. in Abhängigkeit von der Aufmerksamkeit des Fahrers, eingestellt wird. Ist nämlich der Fahrer aufmerksamer, so kann er möglicherweise auch auf eine vergleichsweise kritischere bestimmte Fahrtsituation angemessen reagieren. Hingegen bei geringerer Aufmerksamkeit, kann es möglich sein, dass es zur Herstellung von Verkehrssicherheit förderlich ist, den weiteren Schwellenwert derart zu wählen, dass die Warnung bei der gleichen bestimmten Fahrtsituation dennoch eintritt. Das heißt in anderen Worten, dass für die bestimmte beispielhafte Fahrtsituation eine Warnung des Fahrers durch die Warneinrichtung selektiv nur dann erfolgt, wenn dies unter Maßgabe sowohl des Grads der Aufmerksamkeit, als auch der zugeordneten Kritikalität notwendig erscheint. Dies kann die Verkehrssicherheit erhöhen, während gleichzeitig unnötiges Warnen des Fahrers verringert werden kann.

Gemäß einem weiteren Aspekt betrifft die Erfindung ein Verfahren zur Warnung vor einem eingeschränkten Vermögen eines Fahrers eines Fahrzeugs, das Fahrzeug zu Betreiben. Das Verfahren umfasst das Empfangen eines Indikators, dessen Wert ein Vermögen des Fahrers, das Fahrzeug aufgrund einer Aufmerksamkeit des Fahrers bezüglich einer eine Umgebung des Fahrzeugs beschreibenden Fahrtsituation zu betreiben, quantifiziert und das Empfangen eines weiteren Indikators, dessen Wert eine Kritikalität der Fahrtsituation quantifiziert. Das Verfahren umfasst weiterhin das Durchführen eines Schwellenwertvergleichs des Werts des Indikators mit einem Schwellenwert. Das Verfahren umfasst weiterhin das Durchführen eines weiteren Schwellenwertvergleichs des Werts des weiteren Indikators mit dem weiteren Schwellenwert. Das Verfahren umfasst weiterhin das selektive Warnen des Fahrers und/oder Eingreifen in den Betrieb des Fahrzeugs basierend auf dem durchgeführten Schwellenwertvergleich und basierend auf dem durchgeführten weiteren Schwellenwertvergleich.

Für ein solches Verfahren können Effekte erzielt werden, die denjenigen Effekten entsprechen, welche mit einer Vorrichtung zur Warnung eines Fahrers gemäß einem weiteren Aspekt der Erfindung erzielt werden können. Das Verfahren kann z.B. mit einer Vorrichtung zur Warnung eines Fahrers eines Fahrzeugs gemäß einem weiteren Aspekt der Erfindung durchgeführt werden.

Das Verfahren kann zum Beispiel weiterhin das Erkennen eines Merkmals der Fahrtsituation, das Quantifizieren eines Werts des Merkmals und das Bereitstellen des weiteren Indikators basierend auf dem Wert des Merkmals umfassen. Dies kann z.B. mittels eines entsprechenden Fahrerassistenzsystems erfolgen. Es können auch mehrere Fahrerassistenzsysteme zum bestimmen der Kritikalität verwendet werden. Derart kann der weitere Indikator z.B. möglichst genau berechnet werden.

Weiterhin kann das Verfahren das Einstellen des weiteren Schwellenwerts basierend auf einem empfangenen Betriebsmodus eines Fahrerassistenzsystems und / oder basierend auf dem Wert des Indikators umfassen. Zum Beispiel kann das Verfahren diesbezüglich auch das Empfangen des Betriebsmodus des Fahrerassistenzsystems umfassen.

Die Merkmale der vorab beschriebenen Ausführungsformen und Aspekte der Erfindung können miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente.
FIG. 1 ist eine schematische Ansicht einer Vorrichtung zur Überwachung des Betriebs eines Fahrzeugs gemäß einer Ausführungsform der vorliegenden Erfindung.
FIG. 2 ist eine schematische Ansicht einer Vorrichtung zur Warnung eines Fahrers eines Fahrzeugs gemäß einer Ausführungsform der vorliegenden Erfindung.
FIG. 3 ist eine schematische Ansicht einer Vorrichtung gemäß einer Ausführungsform der vorliegenden Erfindung.
FIG. 4 illustriert schematisch Indikatoren, welche die Müdigkeit, die Aufmerksamkeit und die Situationskritikalität einer Fahrtsituation gemäß einer Ausführungsform der vorliegenden Erfindung quantifizieren.
FIG. 5 illustriert schematisch quantifizierte Merkmale einer Fahrtsituation gemäß einer Ausführungsform der vorliegenden Erfindung.
FIG. 6 ist ein Flussdiagramm eines Verfahrens gemäß einer Ausführungsform der Erfindung zur Überwachung des Betriebs eines Fahrzeugs.
FIG. 7 ist ein Flussdiagramm eines Verfahrens gemäß einer Ausführungsform der Erfindung zur Warnung eines Fahrers eines Fahrzeugs.
FIG. 8 illustriert eine Fahrtsituation eines Fahrzeugs.
FIG. 9 illustriert eine Ausführungsform der Abhängigkeit eines Schwellenwerts der Kritikalität einer Fahrtsituation von einem die Aufmerksamkeit eines Fahrers indizierenden Indikators.

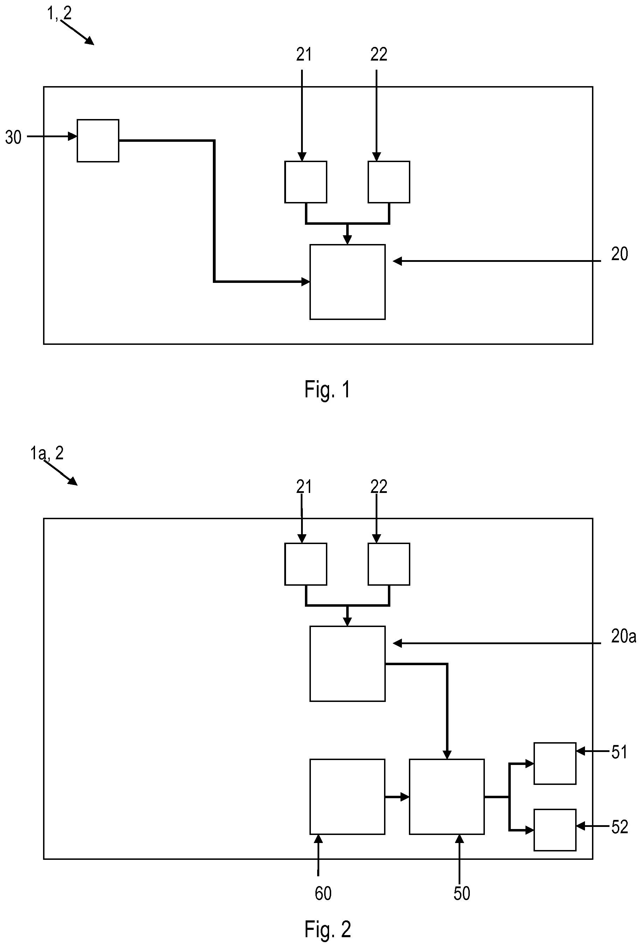

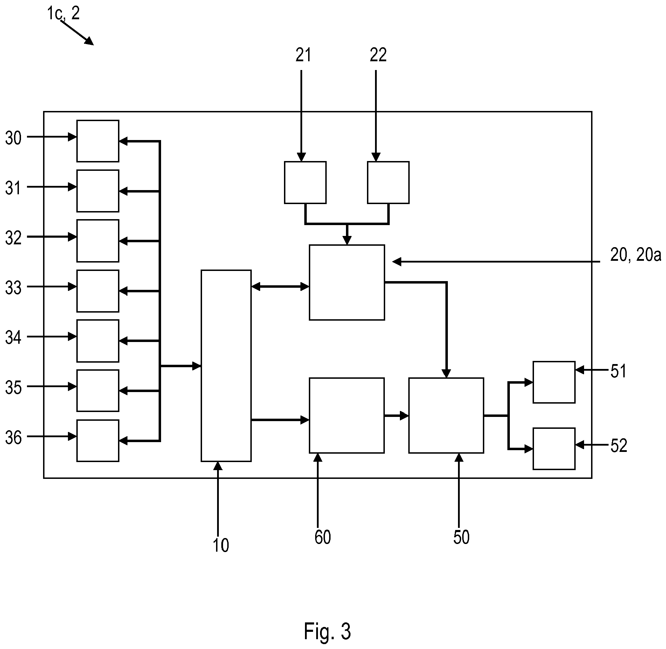

Mit der vorliegenden Erfindung soll es ermöglicht werden, Warn- und Überwachungsvorrichtung bereit zu stellen, welche genauer in der Bestimmung der zu überwachenden Merkmale und differenzierter in der Warnung sind. Gemäß der Aspekte stellt die Erfindung dazu Vorrichtungen bereit. In der FIG. 1 ist eine Vorrichtung 1 zur Überwachung des Betriebs eines Fahrzeugs 2 gezeigt. Die Vorrichtung umfasst ein Fahrerassistenzsystem 30, z.B. ein Verkehrszeichenerkennungssystem. Das System 30 ist mit einem Überwachungssystem 20 gekoppelt. Das Überwachungssystem 20 kann basierend auf einer Kamera 21 und basierend auf sonstiger Sensorik 22, etwa der Überwachung der Lenkaktionen eines Fahrers des Fahrzeugs 2, eine Müdigkeit des Fahrers bestimmen. Insbesondere ist System 20 eingerichtet, um die Bestimmung der Müdigkeit auch basierend auf einer Häufigkeit des Auftretens der Assistenzaktion des Fahrerassistenzsystems 30 durchzuführen. Dann ist das Überwachungssystem 20 eingerichtet, um einen Indikator, dessen Wert das Vermögen des Fahrers, das Fahrzeug aufgrund der bestimmten Müdigkeit zu betreiben, quantifiziert, bereit zu stellen. Z.B. können höhere (niedrigere) Werte des Indikators eine höhere (niedrigere) Müdigkeit beschreiben. Der Wert des Indikators kann z.B. für eine Warnung des Fahrers verwendet werden. Es ist auch möglich, diesen Indikator zur Einstellung von Betriebsparametern und / oder Assistenzaktionen von Fahrerassistenzsystemen, etwa System 30, zu verwenden. Dies wird nachfolgend in Bezug auf FIG. 3 näher erläutert.

Zum Beispiel kann das Fahrerassistenzsystem 30, d.h. die Verkehrszeichenerkennung, eingerichtet sein, um immer dann, wenn eine erkannte Geschwindigkeitsbegrenzung durch das Fahrzeug überschritten wird, eine Assistenzfunktion in Form einer visuellen und / oder akustischen und / oder haptischen Warnung durchzuführen. Die Häufigkeit einer solchen Warnung kann als ein Maß für die Müdigkeit des Fahrers des Fahrzeugs 2 angesehen werden. Da zusätzlich zu den Informationen der Einheiten 21, 22 dem Überwachungssystem 20 zusätzliche Information zur Berechnung der Müdigkeit zur Verfügung steht, kann eine Berechnung der Müdigkeit verbessert werden. Die Assistenzaktion des Fahrerassistenzsystems 30 kann sich nicht in einer Warnung des Fahrers erschöpfen. Es ist auch möglich, dass das System 30 aktiv in den Betrieb des Fahrzeugs eingreift. Im Falle der Verkehrszeichenerkennung 30 wäre es z.B. denkbar, dass bei Überschreitung einer aktuellen, erkannten Geschwindigkeitsbegrenzung optional ein Abbremsen des Fahrzeugs erfolgt.

In FIG. 2 ist eine Vorrichtung 1a zur Warnung eines Fahrers des Fahrzeugs 2 gezeigt. Die Vorrichtung umfasst ein Überwachungssystem 20a, welches eingerichtet ist, die Aufmerksamkeit des Fahrers bezüglich einer Fahrtsituation zu bewerten. Eine erniedrige Aufmerksamkeit des Fahrers kann z.B. durch eine erhöhte Ablenkung bewirkt werden. Eine Bewertung der Aufmerksamkeit kann etwa auf Grundlage einer Überwachung der Blickrichtung des Fahrers mittels Kamera 21 oder auf Grundlage sonstiger Sensorik 22, etwa durch Überwachung von Telefonaten, Innenraumgesprächen, Bedienaktionen anderer Bordinstrumente usf. geschehen. Entsprechende Techniken, die Aufmerksamkeit des Fahrers zu bewerten, sind dem Fachmann bekannt. Weiterhin ist das Überwachungssystem 20a eingerichtet, einen Indikator bereit zu stellen, dessen Wert das Vermögen des Fahrers, das Fahrzeug aufgrund dieser Aufmerksamkeit zu betreiben, quantifiziert. Z.B. können höhere (niedrigere) Werte des Indikators eine niedrigere (höhere) Aufmerksamkeit des Fahrers beschreiben.

Die Vorrichtung 1a umfasst weiterhin ein weiteres Überwachungssystem 60, das die Kritikalität der Fahrtsituation bewerten kann. Z.B. kann die Geradeaus-Fahrt auf einer Schnellstraße eine niedrigere Kritikalität aufweisen, als eine Fahrtsituation in der eine Kollision mit einem Objekt unmittelbar möglich erscheint. Die Fahrtsituation kann hierbei den Zustand des Fahrzeugs selbst betreffen, z.B. Geschwindigkeit, Fahrtrichtung, Funktionsfähigkeit der Komponenten, Anzahl der Insassen, Reifendruck, Reifentyp, Beladung, Anhänger, Tankfüllgrad, etc. Die Fahrtsituation kann aber auch das Umfeld des Fahrzeugs betreffen, also z.B. Hindernisse, Gefahrensituation, Niederschlag, benachbarte Verkehrsteilnehmer, Geschwindigkeitsbegrenzungen, Glätte, Außentemperatur, Helligkeit, Tageszeit, Straßentyp, Steigung der Strasse, Kurvenradien der Straße, Verkehrsdichte, Stau, Abstand zu vorausfahrendem Fahrzeug, Abstand zu seitlichem Fahrzeug, etc. Die Kritikalität kann z.B. mittels geeigneter Fahrzeuginnenraum- und Fahrzeugumfeldsensorik bewertet werden. Dann ist das System 60 eingerichtet, einen weiteren Indikator bereit zu stellen, dessen Wert die Kritikalität quantifiziert. Z.B. können höhere (niedrigere) Werte des Indikators eine höhere (niedrigere) Kritikalität der Fahrtsituation beschreiben.

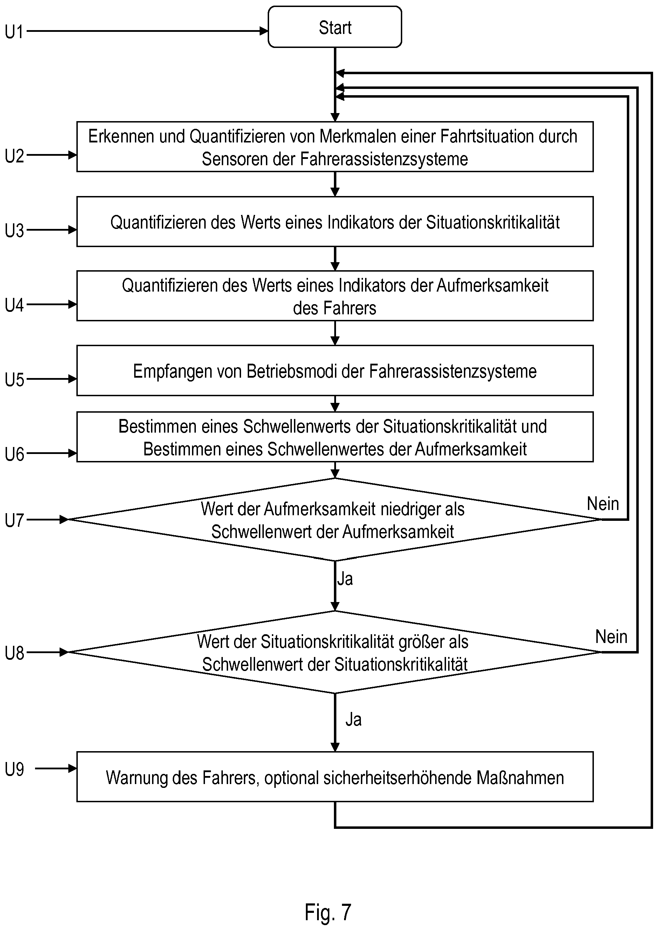

Die Vorrichtung 1a umfasst weiterhin eine Warneinrichtung 50, die den Fahrer mittels Einheiten 51, 52 visuell und / oder akustisch und / oder haptisch warnen kann. Die Warneinrichtung 50 ist eingerichtet, um die Warnung selektiv basierend auf einem Schwellenwertvergleich des von Überwachungssystem 20 erhaltenen Indikators und basierend auf einem weiteren Schwellenwertvergleich des von dem weiteren Überwachungssystem 60 erhaltenen weiteren Indikators durchzuführen. Zum Beispiel kann eine Warnung lediglich dann erfolgen, wenn beide Schwellenwertvergleiche ein positives Ergebnis, d.h. z.B. Werte der Indikatoren größer bzw. kleiner als die Schwellenwerte, geliefert haben wie in Bezug auf FIG.7 näher erläutert. Die Schwellenwerte können z.B. voreingestellt sein oder aber dynamisch angepasst werden. Es ist z.B. möglich, dass der weitere Schwellenwert, mit dem der von System 60 erhaltene weitere Indikator verglichen wird, eine Funktion des von System 20 bereit gestellten Indikators ist. Eine solche Vorrichtung 1a erlaubt es, die Warnung des Fahrers vor geringer Aufmerksamkeit selektiv immer dann durchzuführen, wenn die Fahrtsituation dies auch tatsächlich erfordert. Eine differenzierte Warnung ist möglich.

In FIG. 3 ist eine kombinierte Vorrichtung 1c des Fahrzeugs 2 gezeigt, welche es sowohl erlaubt, den Fahrer des Fahrzeugs 2 zu warnen, als auch den Betrieb des Fahrzeugs 2 zu überwachen. Die Vorrichtung 1c kombiniert also die Merkmale der in den FIGS. 1 und 2 beschriebenen Vorrichtungen 1, 1a. Hierbei ist ein kombiniertes Überwachungssystem 20, 20a vorhanden, welches sowohl eingerichtet ist, um einen Indikator der Aufmerksamkeit des Fahrers als auch einen Indikator der Müdigkeit des Fahrers bereitzustellen. Dies kann vorteilhaft sein, da zum Beispiel die Sensorik 22 und die Kamera 21 sowohl geeignet sein können, die Müdigkeit, als auch die Aufmerksamkeit des Fahrers zu bestimmen. Weiterhin existiert eine Reihe von Fahrerassistenzsystemen 30-36. Diese Fahrerassistenzsysteme können zum Beispiel die Verkehrszeichenerkennung 30, einen Spur-Wechsel-Assistent 31, ein Kollisionswarnsystem 32, eine Geschwindigkeitsregelanlage (GRA) 33, eine angepasste Geschwindigkeitsregelanlage 34 (ACC) 34, einen Spur-Halte-Assistent 35, ein ESP 36 und ein Navigationssystem 37 sein. Entsprechende Vorrichtungen sind dem Fachmann bekannt, so dass in diesem Rahmen keine weiteren Details erläutert werden müssen. Die Fahrerassistenzsysteme 30-36 sind mittels einer Schnittstelle 10 mit dem Überwachungssystem 20, 20a und dem weiteren Überwachungssystem 60 gekoppelt. Die Schnittstelle 10 kann zum Beispiel ein Bus-System sein, welche die Übermittlung bestimmter Parameter der Fahrerassistenzsysteme bzw. der Systeme 20, 20a, 60 in paketförmiger Datenstruktur ermöglicht. Insbesondere kann die Schnittstelle 10 eine bi-direktionale Verbindung zwischen den verschiedenen Einheiten 30-36, 20, 20a, 60 ermöglichen, muss es aber nicht.

In FIG. 3 kann es möglich sein, dass eines der Fahrerassistenzsysteme 30-36 eingerichtet ist, um basierend auf dem Wert des Indikators des Überwachungssystems 20, d.h. der Müdigkeitsüberwachung, einen Betriebsparameter und/oder die zugeordnete Assistenzaktion einzustellen. Die Fahrerassistenzsysteme 30-36 sind nämlich eingerichtet, um ein Merkmal der die Umgebung des Fahrzeugs 2 beschreibenden Fahrtsituation zu erkennen und durch einen Wert des Merkmals zu quantifizieren. Darauf basierend führen die Fahrerassistenzsysteme 30-36 jeweils einen Schwellenwertvergleich des Betriebsparameter mit dem Wert des Merkmals durch und, abhängig von dem Ausgang des Schwellenwertsvergleichs, selektiv die Assistenzaktion. Indiziert nun z.B. der Wert des Indikators des Müdigkeitsüberwachungssystems 20 eine erhöhte Müdigkeit des Fahrers, so kann der Betriebsparameter derart eingestellt werden, dass der Schwellenwertvergleich für einen größeren Wertebereich des Werts des Merkmals in der Assistenzaktion resultiert, d.h. dass das Fahrerassistenzsystem 30-36 früher, häufiger oder umfassender aktiv wird. Z.B. kann die Assistenzaktion in Form einer Warnung des Fahrers eine erhöhte Wahrnehmbarkeit durch den Fahrer aufweisen. Erhöhte Wahrnehmbarkeit kann zum Beispiel durch eine erhöhte Lautstärke einer akustischen Warnung oder durch eine erhöhte Intensität einer visuellen Warnung, zum Beispiel indem ein größerer Bereich für die visuelle Warnung verwendet wird oder indem ein Blinken der Warnmeldung verwendet wird, erreicht werden. Unter Umständen kann eine erhöhte Wahrnehmbarkeit auch durch Kombination der visuellen Warnung mit einer haptischen Warnung erreicht werden. Dadurch, dass der Betrieb der Fahrerassistenzsysteme 30-36 in Abhängigkeit von der erkannten Müdigkeit des Fahrers des Fahrzeugs 2 angepasst wird, kann eine erhöhte Verkehrssicherheit erreicht werden. Die Fahrerassistenzsysteme 30-36 können bei erhöhter Müdigkeit des Fahrers zum Beispiel stärker in den Betrieb des Fahrers eingreifen und somit den Fahrer entlasten.

Es ist auch möglich, dass zum Beispiel zur Bestimmung des weiteren Schwellenwerts, der von Wareneinrichtung 50 verwendet wird, um ihn mit dem weiteren Indikator der Kritikalität der Fahrtsituation zu vergleichen, der von Einheit 60 erhalten wird, basierend auf dem Betriebsmodus einer der Fahrerassistenzsysteme 30-36 oder mehrerer der Fahrerassistenzsysteme 30-36 anzupassen. Wenn nämlich zum Beispiel bestimmte dieser Fahrerassistenzsysteme 30-36 aktiviert sind, so kann eine Kritikalität der Fahrtsituation stärker bzw. geringer eingeschätzt werden. Im Falle, dass zum Beispiel die GRA 33 aktiviert ist, kann die Kritikalität einer Fahrtsituation, bei der erkannt wird, dass eine Kollision mit einem in Fahrtrichtung befindlichen Objekt möglich ist, höher eingeschätzt werden. Ist jedoch zum Beispiel die ACC 34, welche auch das Fahrzeug 2 selbständig zu bremsen vermag, aktiviert, so kann die Kritikalität derselben Fahrtsituation geringer eingestuft werden. Entsprechendes gilt zum Beispiel für eingeschaltetes bzw. ausgeschaltetes ESP 36. Ist das ESP 36 eingeschaltet, so kann zum Beispiel erkannte Glätte auf der Fahrbahn mit einer geringeren Kritikalität eingestuft werden, als wenn ESP 36 ausgeschaltet wäre.

Insbesondere kann das kombinierte Überwachungssystem 20, 20a der FIG. 3 eingerichtet sein, um basierend auf der Häufigkeit des Auftretens der Assistenzaktion der Fahrerassistenzsysteme 30-36 den Indikator bereit zu stellen, dessen Wert das Vermögen des Fahrers, das Fahrzeug aufgrund dieser Aufmerksamkeit zu betreiben, quantifiziert. D.h. es ist auch möglich die Häufigkeit des Auftretens der Assistenzaktion als Maß für die Aufmerksamkeit des Fahrers zu verwenden. Z.B. kann es derart möglich sein, die Aufmerksamkeit genauer zu bestimmen.

Im Allgemeinen ist es auch möglich, dass die Betriebsparameter der Fahrerassistenzsysteme 30-36 basierend auf der erkannten Aufmerksamkeit anzupassen. Bei Indikatoren, deren Werte einen verringerten Aufmerksamkeitsgrad indizieren, kann Z.B. eines oder mehrere der Fahrerassistenzsysteme 30-36 derart angepasst werden, dass sie früher und / oder häufiger und / oder umfassender in den Betrieb des Fahrzeugs eingreifen. Hierbei können ähnliche Aussagen gelten, wie sie in Bezug auf die Müdigkeit voranstehenden und nachfolgend dargelegt werden.

Während in Bezug auf die in FIGS. 1-3 diskutierten Ausführungsbeispiele die verschiedenen Komponenten der Vorrichtung 1, 1a, 1c als getrennte Einheiten dargestellt und diskutiert wurden, ist es auch möglich, dass verschiedene Komponenten in einer Einheit zusammengefasst werden. Einzelne Komponenten können zum Beispiel als Hardware oder Software oder als eine Kombination daraus implementiert werden und in einem oder mehreren Bauteilen zusammen oder getrennt ausgeführt werden. Z.B. können bestimmte der Fahrerassistenzsysteme 30-37 lediglich als eine physikalische Einheit ausgeführt werden, etwa die GRA 33 und die ACC 34. Es ist auch möglich die Einheiten 20, 20a, 60 und 50 in einer Einheit vorzuhalten und z.B. als Software-Programm auf einem Prozessor zu implementieren.

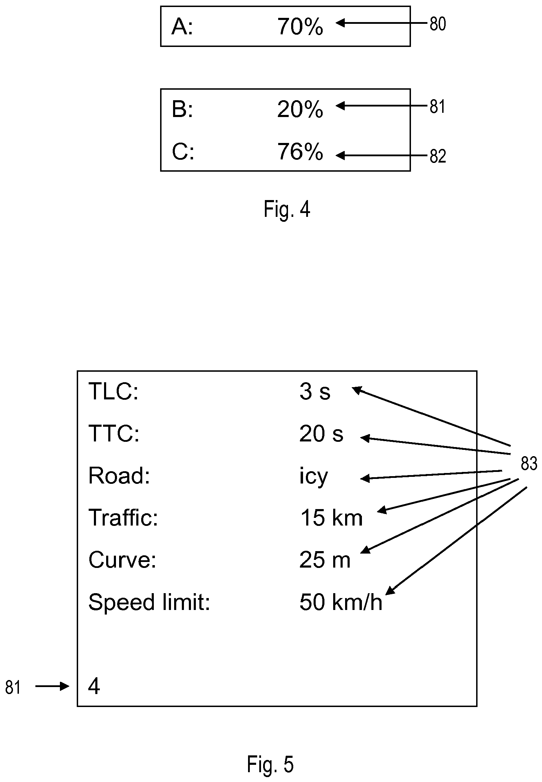

Die FIG. 4 illustriert die verschiedenen Indikatoren schematisch. Z.B. können diese Indikatoren auf dem Bus-System 10 des Fahrzeugs 2 mit bestimmten Markierungen, etwa Header-Markierungen zur Identifikation (in FIG. 4 "A"-"C") anderen Einheiten zur Verfügung gestellt werden. Gezeigt ist ein Wert des Müdigkeits-Indikators 80 der von Überwachungssystem 20 bereitgestellt wird. In dem Beispiel der FIG. 4 beträgt dieser Indikator 70%, wobei 0% keine Müdigkeit indiziert und 100% Schlaf indiziert. Dies ist ein rein exemplarisches Beispiel. Andere Skalen bzw. Bewertungssysteme sind möglich, etwa eine Skala 1-10 oder eine Binärlogik Skala, die lediglich vorhandene oder nicht vorhandene Müdigkeit unterscheidet. Entsprechendes gilt für den Kritikalitätsindikator 81, d.h. den weiteren Indikator, der von Überwachungssystem 60 erhalten wird, und den Aufmerksamkeitsindikator 83, der von Überwachungssystem 20a erhalten wird.

FIG. 5 illustriert quantifizierte Merkmale 83 der Fahrtsituation des Fahrzeugs 2. Auch diese können auf dem Bus-System 10 des Fahrzeugs anderen Einheiten mit bestimmten Markierungen, wie sie in FIG. 5 dargestellt sind, verfügbar gemacht werden. Zum Beispiel kann das mit "TLC" markierte Merkmal die Zeit bis zum Überschreiten einer Fahrermarkierung beschreiben. In dem Fall der FIG. 5 beträgt diese Zeit drei Sekunden. Das bedeutet, dass ein entsprechendes Fahrerassistenzsystem oder eine Kombination von Fahrerassistenzsystemen festgestellt hat, dass das Fahrzeug 2 innerhalb von drei Sekunden zum Beispiel ohne Durchführen einer Lenkaktion die Fahrbahnmarkierung überschreiten würde. Weitere Merkmale 83, welche in FIG. 5 gezeigt sind, betreffen die Zeit bis zu einer Kollision (als "TTC" bezeichnet), die Fahrbahnbeschaffenheit zum Beispiel hinsichtlich eines Reibwerts der Straße (als "Road" bezeichnet), die Entfernung zu einem Stauende (als "Traffic" bezeichnet), die Entfernung zu einer Kurve mit einem bestimmten Krümmungsradius (als "Curve" bezeichnet) sowie die aktuell geltende Geschwindigkeitsbegrenzung (als "Speed Limit" bezeichnet). Dem Fachmann sind Techniken bekannt, um solche Merkmale 83 mittels geeigneter Fahrerassistenzsysteme zu bestimmen. In FIG. 5 ist weiterhin indiziert, dass ausgehend von diesen Merkmalen 83 der Indikator 81, welcher die Situationskritikalität quantifiziert, bereitgestellt werden kann. In FIG. 5 beträgt der Indikator 4 von 10.

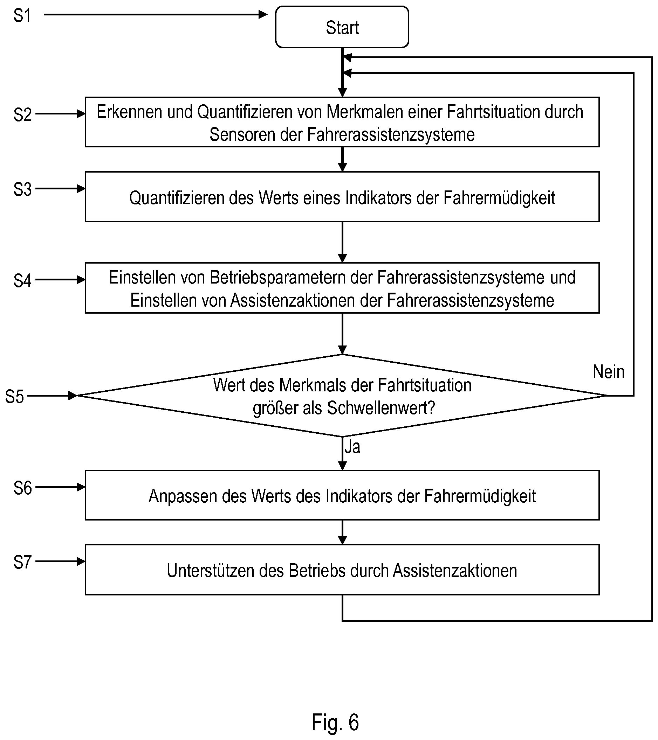

In FIG. 6 ist ein Verfahren zur Überwachung des Betriebs des Fahrzeugs 2 gemäß einer Ausführungsform der vorliegenden Erfindung dargestellt. Das Verfahren beginnt mit Schritt S1. Zunächst erfolgt in Schritt S2 das Erkennen und Quantifizieren von Merkmalen einer Fahrtsituation durch Fahrerassistenzsysteme. Z.B. können dies die Fahrerassistenzsysteme 30-37 wie voranstehend in Bezug auf FIG. 3 diskutiert sein.

In Schritt S3 erfolgt das Quantifizierten des Wertes des Indikators 80 der Fahrermüdigkeit. Das Überwachungssystem 20 ist eingerichtet, um den Indikator 80 bereit zu stellen. In Schritt S4 erfolgt das Einstellen von Betriebsparametern und / oder der Assistenzaktionen bestimmter der Fahrerassistenzsysteme 30-37 basierend auf dem in Schritt S3 quantifizierten Wert des Indikators 80. Schritt S4 ist ein optionaler Schritt.

In Schritt S5 erfolgt ein Schwellenwertvergleich des in Schritt S2 quantifizierten Merkmals bzw. der Merkmale mit den Schwellenwerten. Im Allgemeinen wird jedes der Fahrerassistenzsysteme 30-37 das quantifizierte Merkmal gegenüber einem individuellen Schwellenwert vergleichen. Aus Gründen der Übersichtlichkeit wird hier und im Folgenden lediglich auf ein beispielhaftes der Fahrerassistenzsysteme 30-37 Bezug genommen. Ergibt der Schwellenwertvergleich in Schritt S5, dass der Wert des Merkmals z.B. kleiner ist als der Schwellenwert, so werden Schritte S2-S4 erneut durchgeführt. Andernfalls wird in Schritt S6 der Wert des Indikators 80 angepasst und in Schritt S5 der Betrieb des Fahrzeugs 2 durch die jeweilige Assistenzaktion unterstützt.

Das Auftreten der Notwendigkeit eine Assistenzaktion durchzuführen kann als Indiz für eine erhöhte Müdigkeit des Fahrers gewertet werden. Deshalb erfolgt in Schritt S6 die Anpassung des Indikators 80. Es sollte verstanden werden, dass im Allgemeinen der Indikator 80 differenzierter von der Häufigkeit des Auftretens der Assistenzaktion, d.h. einem positivem Ergebnis des Schwellenwertvergleichs in Schritt S5, abhängen kann.

Nach Durchführung der Schritte S6 und S7 beginnt das Verfahren mit Schritt S2 erneut. Das Verfahren endet, sobald keine Überwachung des Betriebs des Fahrzeugs durch Überwachung der Fahrermüdigkeit mehr notwendig ist.

In FIG. 7 ist ein Flussdiagramm eines Verfahrens zur Warnung des Fahrers des Fahrzeugs 2 gezeigt. Das Verfahren beginnt mit Schritt U1. Zunächst erfolgt in Schritt U2 das Erkennen und Quantifizieren von Merkmalen der Fahrtsituation. Der Schritt U2 kann dem Schritt S2 der FIG. 6 gleichen.

Darauf basierend wird in Schritt U3 ein Wert des Indikators 81, welcher die Kritikalität der Fahrtsituation quantifiziert, bereitgestellt. Z.B. kann das Überwachungssystem 60 entsprechend eingerichtet sein. In Schritt U4 wird der Wert des Indikators 82, welcher die Aufmerksamkeit des Fahrers bezüglich der Fahrtsituation quantifiziert, bereitgestellt. Dies kann z. B. durch das Überwachungssystem 20a erfolgen, wie im Zusammenhang mit den FIGS. 2 und 3 beschrieben.

In Schritt U5 werden jeweils Betriebsmodi der Fahrerassistenzsysteme 30-37 empfangen, also z.B. der An/Aus-Status oder ein anderer Konfigurationsparameter. Diese Information kann in Schritt U6 dazu verwendet werden, einen weiteren Schwellenwert der Kritikalität zu bestimmen. In Schritt U6 wird auch ein Schwellenwert der Aufmerksamkeit bestimmt. Es sind verschiedene Techniken möglich, um diese Schwellenwerte zu bestimmen. Zum Beispiel können bestimmte Anteile der Schwellenwerte voreingestellt sein, so dass zum Beispiel der Schwellenwert der Kritikalität nur zu einem bestimmten Maß auf Grundlage der in Schritt U5 empfangenen Betriebsmodi der Fahrerassistenzsysteme angepasst werden kann. Es ist auch möglich, dass die beiden Schwellenwerte vollkommen voreingestellt sind. Es ist auch möglich, dass die Schwellenwerte fahrerabhängig sind, zum Beispiel kann es möglich sein, dass der Fahrer die Schwellenwerte selbst einstellt. Es ist insbesondere auch möglich, dass der Schwellenwert der Situationskritikalität abhängig von der in Schritt U4 bestimmten Aufmerksamkeit des Fahrers ist.

In Schritt U7 erfolgt der Schwellenwertvergleich des Werts des Indikators 82 der Aufmerksamkeit des Fahrers, wie er in Schritt U4 bestimmt wurde. Ergibt der Schwellenwertvergleich in Schritt U7 zum Beispiel, dass die Aufmerksam des Fahrers niedriger als der Schwellenwert ist, so werden Schritte U2-U6 erneut durchgeführt. Bei einem gegenteiligen Ergebnis wird in Schritt U8 überprüft, ob die Kritikalität der Fahrtsituation größer als der entsprechende Schwellenwert, wie er in Schritt U6 bestimmt wurde, ist. Ist die Kritikalität der Fahrtsituation nicht größer als der Schwellenwert, so werden Schritte U2-U6 erneut durchgeführt. Andernfalls folgt in Schritt U9 eine Warnung des Fahrers. Die Warnung des Fahrers kann in Schritt U9 zum Beispiel visuell oder akustisch oder haptisch oder durch eine Kombination dieser Möglichkeiten erfolgen. Bei anderen Zuordnungen der Aufmerksamkeit und der Kritikalität zu den jeweiligen Zahlenarten der Indikatoren müssen die Schwellenwertvergleiche der Schritte U7 und U8 entsprechend angepasst werden.

Optional kann in Schritt U9 auch sicherheitserhöhend in den Betrieb des Fahrzeugs eingegriffen werden. So können z.B. Fahrerassistenzsysteme 30-36 durch Assistenzaktionen eingreifen, etwa bremsen, beschleunigen, lenken etc.

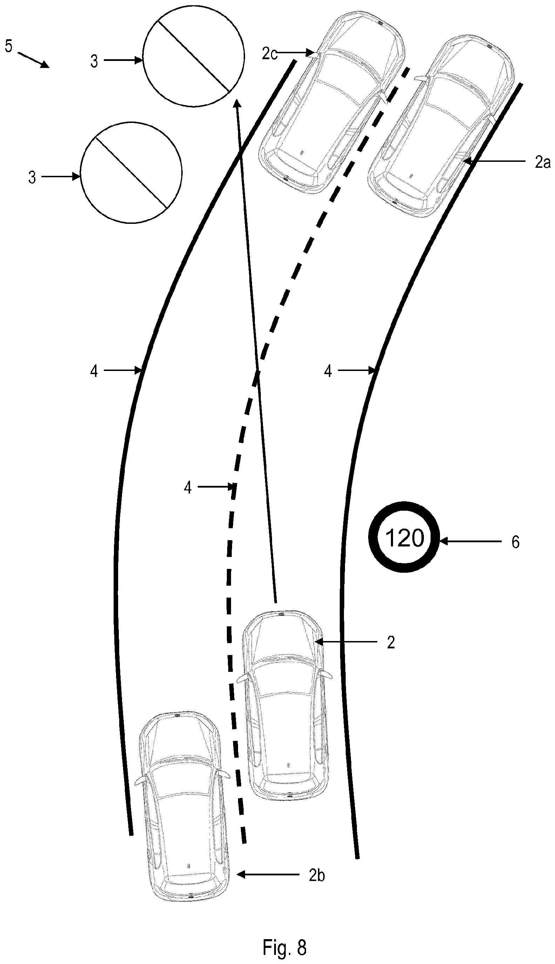

FIG. 8 illustriert eine Fahrtsituation 5. Das Fahrzeug 2 befindet sich auf einer zweispurigen Schnellstraße, welche durch Fahrbahnmarkierung 4 begrenzt ist. Im toten Winkel des Fahrzeugs 2 befindet sich ein weiteres Fahrzeug 2b. In einer gewissen Entfernung in Fahrtrichtung des Fahrzeugs 2 befindet sich ein Stauende, welches durch die Fahrzeuge 2a und 2c gebildet wird. Der Pfeil in FIG. 8 illustriert den momentanen Bewegungsvektor, d.h die Richtung, welcher das Fahrzeug ohne Lenkhandlung folgen würde. Eine Geschwindigkeitsbegrenzung 6 ist dargestellt.

Zum Beispiel kann das Fahrerassistenzsystem 30, d.h. die Verkehrszeichenerkennung, geeignet sein, die Geschwindigkeitsbegrenzung 6 zu erkennen. Der Spur-Wechsel-Assistent 31 kann geeignet sein, das Fahrzeug 2b im toten Winkel zu erkennen. Der Spur-Halte-Assistent 35 kann geeignet sein die Entfernung zu einer seitlich benachbarten Fahrbahnmarkierung, wie etwa Fahrbahnmarkierung 4, zu erkennen. Das Navigationssystem 37 kann geeignet sein, das Stauende, welches durch die Fahrzeuge 2a und 2c gebildet wird, zu erkennen. Das Kollisions-Warnsystem 32 kann wiederum geeignet sein, eine Zeit bis zum Überschreiten der Fahrbahnmarkierung 4 bzw. eine Zeit bis zur Kollision mit einem der Hindernisse 3 zu berechnen. Es ist auch möglich, dass die GRA 33 bzw. die ACC 34 die Fahrzeuge 2a und 2c erkennt. Sollte die durch die Fahrbahnmarkierungen 4 begrenzte Straße glatt sein, so kann das ESP 36 aufgrund der fahrdynamischen Daten den verringerten Reibwert der glatten Straße erkennen.

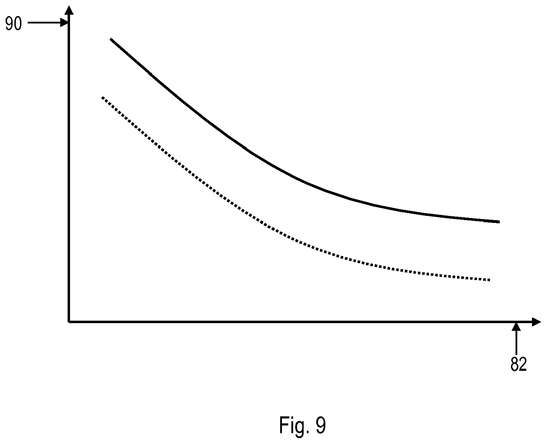

Bezug nehmend auf FIG.9, wie voran stehend in Bezug auf die FIG. 3 erläutert wurde, kann das Überwachungssystem 20a eingerichtet sein, um den weiteren Schwellenwert, der dazu verwendet wird, den Wert von Indikator 81 der Kritikalität der Fahrtsituation 5 zu bewerten, basierend auf dem Indikator 82, welcher die Aufmerksamkeit des Fahrers bezüglich der Fahrtsituation 5 beschreibt, einstellen. Eine mögliche Abhängigkeit dieses weiteren Schwellenwerts 90 der Kritikalität der Fahrtsituation von dem Indikator 82, welcher die Aufmerksamkeit des Fahrers quantifiziert, ist in FIG. 9 dargestellt. Positionen auf der Achse des Indikators 82, welche in FIG. 9 weiter rechts dargestellt sind, korrespondieren mit einer verringerten Aufmerksamkeit des Fahrers. Das bedeutet, dass eine Fahrerablenkung höhere Werte annimmt. Positionen, die auf der Achse des Schwellenwerts 90 in FIG. 9 weiter unten dargestellt sind, korrespondieren zu einem Schwellenwert, welcher in einem größeren Wertebereich des Indikators der Fahrtsituation die Fahrtsituation als kritisch einstuft.

Wie aus FIG. 7 ersichtlich ist, kann eine durch die durchgezogene bzw. gestrichelte Linie dargestellte Abhängigkeit des Schwellenwerts 90 von dem Indikator 82 derart sein, dass für verringerte Aufmerksamkeit des Fahrers geringere Anforderungen an die Kritikalität der Fahrtsituation durch zum Beispiel einen verringerten Schwellenwert gestellt werden, bevor Warneinrichtung 50 warnt. Beispielhaft sind in FIG. 9 weiterhin zwei Kurven dargestellt, die jeweils dem Fall entsprechen, dass ein bestimmtes Fahrerassistenzsystem, zum Beispiel die angepasste Geschwindigkeitsregelanlage 34, eingeschaltet bzw. ausgeschaltet ist. Ist die ACC 34 eingeschaltet, so wird die Abhängigkeit des Schwellenwerts 90 von dem Indikator 82 durch die durchgezogene Linie beschrieben. Ist die ACC 34 ausgeschaltet, so beschreibt die gepunktete Linie diese Abhängigkeit. Dies bedeutet, dass bei eingeschalteter ACC 34 eine Fahrtsituation eine höhere Kritikalität aufweisen muss, um einen positiven Ausgang des Schwellenwertvergleichs zu erreichen, sodass eine Warnung durch Warneinrichtung 50 erfolgt. Siehe hierzu FIG.7. Die in FIG. 9 gezeigten Abhängigkeiten des Schwellenwerts 90 von dem Indikator 82 sind rein beispielhaft gedacht und nicht limitierend.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Vorrichtung (1, 1c) zur Überwachung des Betriebs eines Fahrzeugs (2), die Vorrichtung (1, 1c) umfassend:
- ein Fahrerassistenzsystem (30-36), welches eingerichtet ist, um einen Fahrer des Fahrzeugs (2) bei dem Betrieb des Fahrzeugs (2) durch eine Assistenzaktion selektiv zu unterstützen,
- ein Überwachungssystem (20), welches eingerichtet ist, um einen Indikator (80), dessen Wert ein Vermögen des Fahrers, das Fahrzeug (2) aufgrund einer Müdigkeit des Fahrers zu betreiben, quantifiziert, basierend auf einer Häufigkeit des Auftretens der Assistenzaktion bereit zu stellen, **dadurch gekennzeichnet, dass**
das Fahrerassistenzsystem (30-36) durch einen Betriebsparameter charakterisiert ist und eingerichtet ist, um basierend auf dem Wert des Indikators (80), den Betriebsparameter und/oder die Assistenzaktion einzustellen,
sowie ein Merkmal (83) einer eine Umgebung des Fahrzeugs (2) beschreibenden Fahrtsituation (5) zu erkennen und durch einen Wert des Merkmals (83) zu quantifizieren und basierend auf einem Schwellenwertvergleich des Betriebsparameters mit dem Wert des Merkmals (83) den Fahrer selektiv durch die Assistenzaktion zu unterstützen.

2. Vorrichtung (1, 1c) nach Anspruch 1, wobei das Fahrerassistenzsystem (30-36) eingerichtet ist, um, wenn der Wert des Indikators (80) ein eingeschränktes Vermögen des Fahrers, das Fahrzeug (2) zu betreiben, beschreibt, den Betriebsparameter so einzustellen, dass der Schwellenwertvergleich für einen größeren Wertebereich des Werts des Merkmals (83) in der Assistenzaktion resultiert und/oder die Assistenzaktion so einzustellen, dass die Assistenzaktion den Betrieb des Fahrzeugs (2) stärker unterstützt.

3. Vorrichtung (1, 1c) nach einem der Ansprüche 1 oder 2, wobei das Fahrerassistenzsystem (30-36) sowie das Merkmal (83) der Fahrtsituation (5) und der jeweils zugehörige Betriebsparameter aus der Gruppe ausgewählt werden, die aus den Elementen besteht:
Verkehrszeichenerkennungssystem (30) mit erkannter Geschwindigkeitsbegrenzung (6) und Schwellenwertgeschwindigkeit;
Spur-Wechsel-Assistent (31) mit erkannter Entfernung zu einem seitlich benachbarten Fahrzeug (2b) und einer ersten Schwellenwertentfernung;
Spur-Halte-Assistent (35) mit erkannter Entfernung zu einer seitlich benachbarten Fahrbahnmarkierung (4) und einer zweiten Schwellenwertentfernung;
Kollisions-Warnsystem (32) mit erkannter Entfernung zu einem frontalen Hindernis (3) und einer dritten Schwellenwertentfernung.

4. Vorrichtung (1, 1c) nach einem der voranstehenden Ansprüche, wobei das Fahrerassistenzsystem (30-36) sowie die Assistenzaktion aus der Gruppe ausgewählt werden, die aus den Elementen besteht:
Verkehrszeichenerkennungssystem (30) mit kombinierter akustischer und visueller Warnung bezüglich der erkannten Geschwindigkeitsbegrenzung (6);
Spur-Wechsel-Assistent (31) mit visueller Warnung von bestimmter Größe und bestimmtem zeitlichen Verlauf in einem Seitenspiegel des Fahrzeugs (2);
Spur-Wechsel-Assistent (31) mit aktivem Eingriff in eine Lenkung des Fahrzeugs (2) und Vibration eines Lenkrades der Lenkung;
Spur-Halte-Assistent (35) mit aktivem Eingriff in die Lenkung des Fahrzeugs (2) und Vibration des Lenkrades der Lenkung;
Kollisions-Warnsystem (32) mit kurzzeitiger Betätigung einer Fahrzeugbremse des Fahrzeugs (2).

5. Verfahren zur Überwachung des Betriebs eines Fahrzeugs (2), das Verfahren umfassend:
- selektives Unterstützen des Betriebs des Fahrzeugs (2) mittels einer Assistenzaktion eines Fahrerassistenzsystems (30-36),
- Bereitstellen eines Indikators (80), dessen Wert ein Vermögen des Fahrers, das Fahrzeug (2) aufgrund einer Müdigkeit des Fahrers zu betreiben, quantifiziert, basierend auf der Häufigkeit des selektiven Unterstützens,
**dadurch gekennzeichnet; dass** das Verfahren weiterhin umfasst:
- Einstellen eines Betriebsparameters des Fahrerassistenzsystems (30-36) und/oder der Assistenzaktion des Fahrerassistenzsystems (30-36) basierend auf dem bereitgestellten Wert des Indikators (80),
- Erkennen eines Merkmals (83) einer eine Umgebung des Fahrzeugs (2) beschreibenden Fahrtsituation (5) mittels des Fahrerassistenzsystems (30-36),
- Quantifizieren eines Werts des Merkmals (83),
- Durchführen eines Schwellenwertvergleichs des Betriebsparameters des Fahrerassistenzsystems (30-36) mit dem Wert des Merkmals (83), wobei das selektive Unterstützen basierend auf dem Schwellenwertvergleich stattfindet.

6. Verfahren nach Anspruch 5, wobei, wenn der Wert des Indikators (80) ein eingeschränktes Vermögen des Fahrers, das Fahrzeug (2) zu betreiben, beschreibt, das Einstellen des Betriebsparameters so erfolgt, dass der Schwellenwertvergleich für einen größeren Wertebereich des Werts des Merkmals (83) in der Assistenzaktion des Fahrerassistenzsystems (30-36) resultiert und/oder das Einstellen der Assistenzaktion so erfolgt, dass die Assistenzaktion den Betrieb des Fahrzeugs (2) stärker unterstützt.

## Claims

1. Device (1, 1c) for monitoring the operation of a vehicle (2), the device (1, 1c) comprising:
- a driver assistance system (30-36) which is configured to selectively assist a driver of the vehicle (2) in operating the vehicle (2) by means of an assistance action,
- a monitoring system (20) which is configured to make available an indicator (80), whose value quantifies a capability of the driver to operate the vehicle (2) owing to fatigue on the part of the driver, on the basis of a frequency of occurrence of the assistance function, **characterized in that**
the driver assistance system (30-36) is **characterized by** an operating parameter and is configured to set the operating parameter and/or the assistance function on the basis of the value of the indicator (80),
and to detect a feature (83) of a travel situation (5) which describes surroundings of the vehicle (2), and to quantify said feature (83) by means of a value of the feature (83), and to assist the driver selectively by means of the assistance action on the basis of a threshold value comparison of the operating parameter with the value of the feature (83).

2. Device (1, 1c) according to Claim 1, wherein the driver assistance system (30-36) is configured to set the operating parameter, when the value of the indicator (80) describes a restricted capability of the driver to operate the vehicle (2), in such a way that the threshold value comparison for a relatively large value range of the value of the feature (83) results in the assistance action, and/or to set the assistance action in such a way that the assistance action assists the operation of the driver (2) to a greater extent.

3. Device (1, 1c) according to one of Claims 1 and 2, wherein the driver assistance system (30-36) and the feature (83) of the travel situation (5) and the respectively associated operating parameter are selected from the group which is composed of the elements:
road sign detection system (30) with detected speed limit (6) and threshold value speed;
lane change assistant (31) with detected distance from a laterally adjacent vehicle (2b) and a first threshold value distance;
lane keeping assistant (35) with detected distance from a laterally adjacent carriageway marking (4) and a second threshold value distance;
collision warning system (32) with detected distance from an obstacle (3) in front and a third threshold value distance.

4. Device (1, 1c) according to one of the preceding claims, wherein the driver assistance system (30-36) and the assistance action are selected from the group which is composed of the elements:
road sign detection system (30) with combined acoustic and visual warning relating to the detected speed limit (6);
lane change assistant (31) with visual warning of a determined size and determined time profile in a side mirror of the vehicle (2);
lane change assistant (31) with active intervention into a steering system of the vehicle (2) and vibration of a steering wheel of the steering system;
lane keeping assistant (35) with active intervention into the steering system of the vehicle (2) and vibration of the steering wheel of the steering system; and
collision warning system (32) with brief activation of a vehicle brake of the vehicle (2).

5. Method for monitoring the operation of a vehicle (2), the method comprising:
- selective assistance of the operation of the vehicle (2) by means of an assistance action of a driver assistance system (30-36),
- making available an indicator (80) whose value quantifies a capability of the driver to operate the vehicle (2) owing to fatigue of the driver, on the basis of the frequency of the selective assistance,
**characterized in that** the method also comprises:
- setting an operating parameter of the driver assistance system (30-36) and/or the assistance function of the driver assistance system (30-36) on the basis of the value made available for the indicator (80),
- detecting a feature (83) of a travel situation (5), which describes surroundings of the vehicle (2), by means of the driver assistance system (30-36),
- quantifying a value of the feature (83),
- carrying out a threshold value comparison of the operating parameter of the driver assistance system (30-36) with the value of the feature (83), wherein the selective assistance is provided on the basis of the threshold value comparison.

6. Method according to Claim 5, wherein, when the value of the indicator (80) describes a restricted capability of the driver to operate the vehicle (2), the operating parameter is set in such a way that the threshold value comparison for a relatively large value range of the value of the feature (83) results in the assistance action of the driver assistance system (30-36), and/or the assistance action is set in such a way that the assistance action assists the operation of the vehicle (2) to a greater extent.

## Revendications

1. Dispositif (1, 1c) pour surveiller le fonctionnement d'un véhicule (2), le dispositif (1, 1c) comprenant :
- un système d'assistance du conducteur (30-36), qui est prévu pour assister de manière sélective un conducteur du véhicule (2) lors du fonctionnement du véhicule (2) par une action d'assistance,
- un système de surveillance (20) qui est prévu pour fournir un indicateur (80) dont la valeur quantifie une capacité du conducteur à conduire le véhicule (2) par rapport à une fatigue du conducteur, en se basant sur la fréquence d'apparition de l'action d'assistance,
**caractérisé en ce que**
le système d'assistance du conducteur (30-36) est **caractérisé par** un paramètre de fonctionnement et est prévu pour ajuster le paramètre de fonctionnement et/ou l'action d'assistance en se basant sur la valeur de l'indicateur (80),
et pour reconnaître une caractéristique (83) d'une situation de conduite (5) décrivant un environnement du véhicule (2) et pour la quantifier par une valeur du caractéristique (83) et, en se basant sur une comparaison de valeur seuil du paramètre de fonctionnement avec la valeur de la caractéristique (83), pour assister le conducteur de manière sélective par l'action d'assistance.

2. Dispositif (1, 1c) selon la revendication 1, dans lequel le système d'assistance du conducteur (30-36), lorsque la valeur de l'indicateur (80) décrit une capacité limitée du conducteur à conduire le véhicule (2), est prévu pour ajuster le paramètre de fonctionnement de telle sorte que la comparaison de la valeur seuil, pour une plus grande plage de valeurs de la valeur de la caractéristique (83), entraîne l'action d'assistance et/ou pour ajuster l'action d'assistance de telle sorte que l'action d'assistance à la conduite du véhicule (2) soit intensifiée.

3. Dispositif (1, 1c) selon l'une quelconque des revendications 1 ou 2, dans lequel le système d'assistance du conducteur (30-36) ainsi que la caractéristique (83) de la situation de conduite (5) et le paramètre de fonctionnement associé respectif sont choisis parmi le groupe constitué des éléments suivants :
système de reconnaissance de panneaux de circulation (30) avec détection d'une limitation de vitesse (6) et avec une valeur seuil de vitesse ;
assistant de changement de voie (31) avec détection d'éloignement par rapport à un véhicule situé latéralement (2b) et avec une première valeur seuil d'éloignement ;
assistant du maintien dans la voie (35) avec détection d'éloignement par rapport à un marquage de la chaussée latéral adjacent (4) et avec une deuxième valeur seuil d'éloignement ;
système d'avertissement de collision (32) avec détection d'éloignement par rapport à un obstacle frontal (3) et avec une troisième valeur seuil d'éloignement.

4. Dispositif (1, 1c) selon l'une quelconque des revendications précédentes, dans lequel le système d'assistance du conducteur (30-36) ainsi que l'action d'assistance sont choisis parmi le groupe constitué des éléments suivants :
système de reconnaissance de panneaux de circulation (30) avec avertissement acoustique et
visuel combiné par rapport à la détection de la limite de vitesse (6) ;
assistant de changement de voie (31) avec avertissement visuel de la grandeur déterminée et
de l'allure déterminée dans le temps dans un rétroviseur latéral du véhicule (2) ;
assistant de changement de voie (31) avec intervention active dans une direction du véhicule (2) et vibration d'un volant de la direction ;
assistant de maintien dans la voie (35) avec intervention active dans la direction du véhicule (2) et vibration du volant de la direction ;
système d'avertissement de collision (32) avec actionnement bref d'un frein du véhicule (2).

5. Procédé de surveillance du fonctionnement d'un véhicule (2), le procédé comprenant :
- assistance sélective au fonctionnement du véhicule (2) au moyen d'une action d'assistance d'un système d'assistance du conducteur (30-36),
- fourniture d'un indicateur (80) dont la valeur quantifie une capacité du conducteur à conduire le véhicule (2) par rapport à une fatigue du conducteur, en se basant sur la fréquence de l'assistance sélective,
**caractérisé en ce que** le procédé comprend en outre :
- l'ajustement d'un paramètre de fonctionnement du système d'assistance du conducteur (30-36) et/ou de l'action d'assistance du système d'assistance du conducteur (30-36) sur la base de la valeur fournie de l'indicateur (80),
- détection d'une caractéristique (83) d'une situation de conduite (5) décrivant un environnement du véhicule (2) au moyen du système d'assistance du conducteur (30-36),
- quantification d'une valeur de la caractéristique (83),
- réalisation d'une comparaison de valeur seuil du paramètre de fonctionnement du système d'assistance du conducteur (30-36) avec la valeur de la caractéristique (83), l'assistance sélective ayant lieu sur la base de la comparaison de valeur seuil.

6. Procédé selon la revendication 5, dans lequel, lorsque la valeur de l'indicateur (80) décrit une capacité limitée du conducteur à conduire le véhicule (2), l'ajustement du paramètre de fonctionnement se produit de telle sorte que la comparaison de la valeur seuil, pour une plus grande plage de valeurs de la valeur de la caractéristique (83), entraîne l'action d'assistance du système d'assistance du conducteur (30-36) et/ou l'ajustement de l'action d'assistance se produit de telle sorte que l'action d'assistance à la conduite du véhicule (2) soit intensifiée.
